# EUROPEAN PATENT SPECIFICATION

(11) **EP 2 851 785 B1**
(45) Date of publication and mention of the grant of the patent: **13.06.2018**
(21) Application number: 14183046.3
(22) Date of filing: 01.09.2014
(51) Int. Cl.: G06F 3/14

(54) **Dual screen system and method**
System und Verfahren mit zwei Bildschirmen
Système et procédé à deux écrans

(30) Priority: 03.09.2013 KR 20130105175
(43) Date of publication of application: 25.03.2015
(73) Proprietor: Samsung Electronics Co., Ltd., Gyeonggi-do 443-742 (KR)
(72) Inventor: Shin, Sangmin, 443-742 Gyeonggi-do (KR)
(74) Representative: HGF Limited

(56) References cited:
- CN-A- 103 246 433
- US-A1- 2009 027 302
- US-A1- 2009 187 853

## Description

### TECHNICAL FIELD

The present disclosure relates generally to a dual monitor system and method, and more particularly to a dual monitor system and method using a terminal including a touch screen and a computing device including a screen.

### BACKGROUND

Electronic devices including recently developed computers can provide users with various functions by executing application programs through processors. As various application programs have been developed and specifications of electronic devices have been improved, the electronic device can simultaneously perform several tasks and connect a main body of the electronic device to two or more screens to meet a multitasking environment, so as to support a dual monitoring mode in which respective task environments are displayed.

Meanwhile, various terminals are used as electronic devices which can be carried by users today. According to the development of technologies, the electronic devices in a comprehensive multimedia device type having complex functions such as not only a voice call but also a video call, taking a picture or a video, reproducing music and a video file, receiving a broadcast, playing a game and wireless Internet and the like are released. Specifications of a processor installed in the terminal are being improved at an alarming rate and terminals which provide light and large screens within a portable range are being developed. Further, a terminal including a touch screen is currently provided to increase the interface convenience of the user.

A portable terminal and a computing device provided to process various tasks in a fixed location may provide the user with different functions as necessary. Accordingly, the user may require simultaneously use of the terminal and the computing device, but it is inconvenient for the user to separately control the terminal and the computing device.

Therefore, a method of supporting a dual monitoring mode of the computing device through interworking between the terminal and the computing device and also executing a function of the terminal is required.

US-2009/027302-A1 discloses a method for operating an object between a first terminal and a second terminal and a terminal using the method are disclosed. The method comprises steps of extending the display space of one of the first and second terminals to the other terminal, intercepting, at said one of the first and second terminals, an even associated with said object occurring in the terminal so as to obtain the position of said object, informing said other terminal of the position of said object, and redrawing said object on the screen of said other terminal based on the received position. With the method, a cursor/cursors can freely roam over the screens of two computers. Thus, the efficiency of cooperation of two computers spaced by a viewing distance can be improved. The cursor on one of the two computers can control the other computer to conduct any control operation.

US-2009/187853-A1 discloses a method of synchronizing multiple views of multiple displayed documents. The method includes displaying a first document in a first viewing window. The method includes displaying a second document in a second viewing window. The method includes determining from the viewing windows an active window. The method includes determining for the active window a scale value and an offset value associated with the display of the associated one of the documents. The method includes redisplaying each document associated with the viewing window that is not the active window by using the determined scale and offset values.

CN-103246433-A discloses a screen user-defined window-dividing display control method. The Screen user-defined window-dividing display control method includes drawing multiple dividing lines on a screen by a user, then dividing the screen into multiple independent windows; adding corresponding display content to each window respectively; and adjusting positions of the display content of each window as required. By the screen user-defined window-dividing display control method, the defects of the prior art are solved; and the screen user-defined window-dividing display control method has the advantages that the user can draw lines to divide screen display areas and decide the number, size and arrange format of the divided areas in the user-defined manner, and flexibility of screen dividedly usage is increased.

### SUMMARY

According to a first aspect of the present invention there is provided a dual monitor system, comprising a mobile terminal and a computing device, connected through a wire or wirelessly, the mobile terminal comprising: a transceiver configured to communicate data with the computing device; a touch screen configured to display a user interface; and a first processor configured to provide the user interface to the touch screen for display in a single monitor mode; and the computing device comprising: a user input means; a screen configured to display one or more application program windows; and a second processor configures to provide the one or more application windows to the screen for display in a single monitor mode; the dual monitor system comprising: a dual monitor controller connected to the mobile terminal and the computing device, and configured to: detect that one of the one or more application program windows displayed on the screen of the computing device is dragged using the user input means connected to the computing device in a direction of the touch screen of the mobile terminal; control the touch screen in a dual monitor mode to display an application window if the application program window is dragged for a distance equal to, or above, a threshold; and in response to the displaying of the application program window on the touch screen of the mobile terminal, copy, when in the dual monitor mode, a user interface, comprising a plurality of executable functions, from the touch screen of the mobile terminal onto the screen of the computing device.

According to a second aspect of the present invention there is provided a method for dual screen presentation by the dual monitor system of claim 1, the method comprising: detecting that one of one or more application program windows displayed on the screen of the computing device is dragged using the user input means connected to the computing device (200) in a direction of the touch screen of the mobile terminal; controlling the touch screen in a dual monitor mode to display an application window if the application program window is dragged for a distance equal to, or above, a threshold; and in response to the displaying of the application program window on the touch screen of the mobile terminal, copying, when in the dual monitor mode, a user interface comprising a plurality of executable functions, from the touch screen of the mobile terminal onto the screen of the computing device.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGS. 1A and 1B illustrate a dual monitoring system according to an embodiment of the present disclosure;
FIG. 2 illustrates a detailed embodiment of the terminal of FIGS. 1A and 1B;
FIG. 3 illustrates a detailed embodiment of the computing device of FIGS. 1A and 1B;
FIGS. 4A to 4C illustrate a method in which a dual monitoring system switches a dual monitor mode according to an embodiment of the present disclosure;
FIG. 5A illustrates a comparative example of a dual monitor system in a single monitor mode;
FIG. 5B illustrates a comparative example of a dual monitor system in a dual monitor mode;
FIGS. 6A to 6C illustrate a comparative example of a method in which a dual monitor system ends a dual monitor mode; and
FIG. 7 is a comparative example of a flowchart illustrating a dual monitor method.

### DETAILED DESCRIPTION

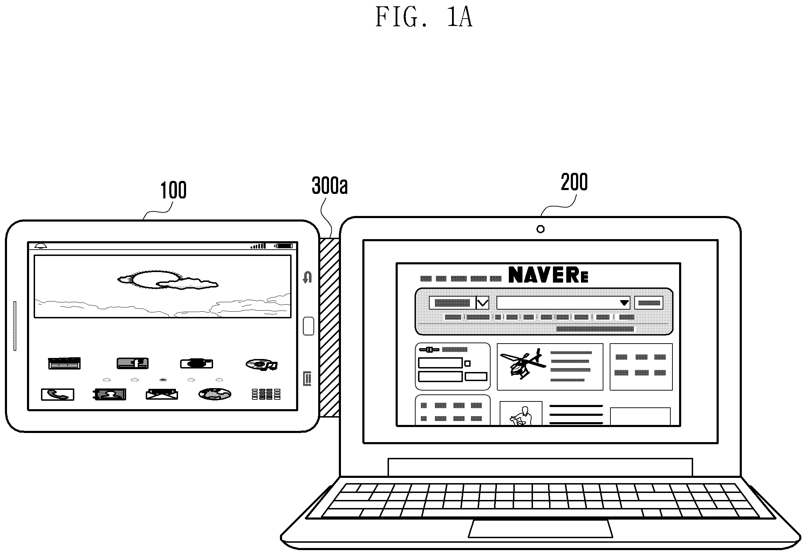

FIGURES 1A through 7, discussed below, and the various comparative examples used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. It is noted that, where possible, the same reference numerals are designated to the same components in the accompanying drawings. Further, a detailed description of a known function and configuration which may make the subject matter of the present disclosure unclear will be omitted.

Prior to the detailed description through embodiments, a computing device described in the specification and drawings may include all electronic devices which provide a user with various functions by executing application programs through a process stored in a memory.

A "dual monitor mode" used in the specification and drawings refers to a case where a task environment of an application program executed by the computing device is implemented on not only a screen of the computing device but also a touch screen of a terminal connected to the computing device. That is, the "dual monitor mode" refers to a case where the touch screen of the terminal operates as an additional screen of the computing device.

A "single monitor mode" described in the specification and drawings refers to a case where functions of the terminal and the computing device executed by corresponding processors are independently displayed on respective screens in a state where the terminal and the computing device are connected to each other. That is, the "single monitor mode" refers to a case where a task environment of the terminal is implemented on the touch screen of the terminal and a task environment of the computing device is implemented on the screen of the computing device.

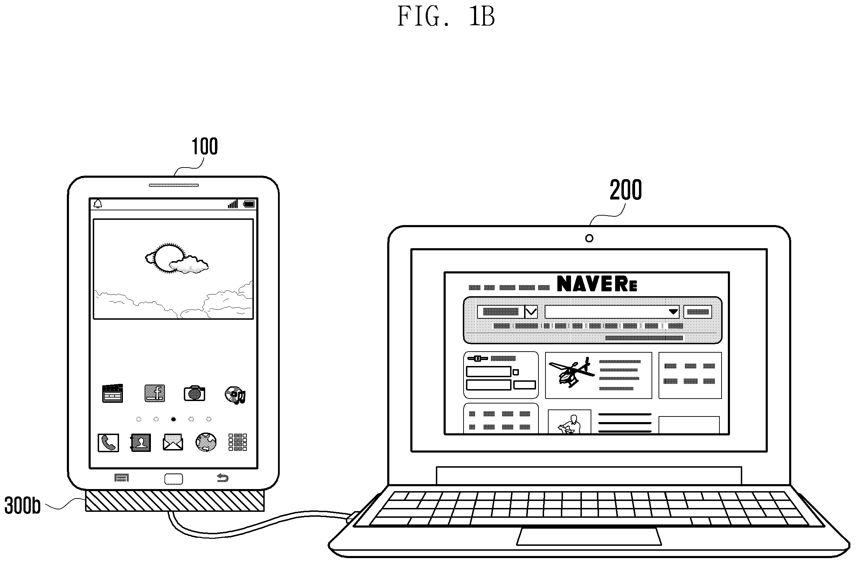

FIGS. 1A and 1B illustrate a dual monitor system according to an embodiment of the present disclosure.

The dual monitor system includes a terminal 100 and a computing device 200 as illustrated in FIGS. 1A and 1B. The terminal 100 can include a touch screen and display a user interface on the touch screen. The computing device 200 can include a screen and display an application program window executed by the computing device on the screen. The terminal 100 and the computing device 200 are executed by processors stored in respective memories thereof.

A dual monitor system connects the terminal 100 and the computing device 200 to allow the terminal 100 and the computing device 200 to exchange signals. The terminal 100 and the computing device 200 can be connected to each other through a wire or wirelessly connected to each other by using a wireless network. Meanwhile, a connection device 300a for connecting one side of the terminal 100 and one side of the screen of the computing device 200 can be further included as illustrated in FIG. 1A, or a connection device 300b for fixing the terminal 100 and connecting the terminal 100 to the computing device 200 can be further included for convenience of the user. Embodiments of the present disclosure include all methods of disposing the terminal 100 and the computing device 200 such that the user can have secured view for the touch screen of the terminal 100 and the screen of the computing device 200 can be secured.

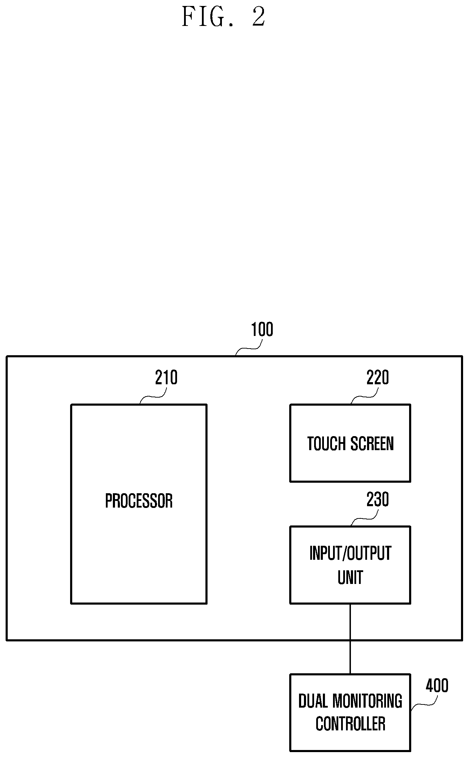

FIG. 2 illustrates details of the terminal 100.

The terminal 100 can include a processor 210, a touch screen 220, and an input/output unit 230. The processor 210 can control general operations of the terminal 100. That is, the processor 210 can perform a function of providing a user interface to the touch screen 220, receiving a user input through the user interface, and executing a corresponding application program. The processor can receive a user input through the touch screen 220 and also receive a user input through the input/output unit 230.

The touch screen 220 can receive a touch input by the user and also receive an output signal from the processor 210 or the input/output unit 230 and display an output screen. That is, the touch screen 220 can display a user interface and an executed application program and the displayed user interface and application program can be intuitively controlled by a touch input on the touch screen 220 by the user.

The input/output unit 230 is provided to connect the terminal 100 and an external device, for example, the computing device 200. When the input/output unit 230 is connected to the computing device 200, an output signal of the processor 210 can be transmitted to the screen of the computing device 200, a user input signal by the computing device 200 can be transmitted to the processor 210 of the terminal 100, and an output signal of the computing device 200 can be transmitted to the touch screen 230 of the terminal 100.

The dual monitor system according to the embodiment of the present disclosure can include a dual monitor controller 400 for operating the terminal 100 and the computing device 200 in a dual monitor mode. The dual monitor controller 400 is connected to the terminal 100 and the computing device 200 to control switching to the dual monitor mode or the single monitor mode. At this time, the dual monitor controller 400 can be located outside the terminal 100 as illustrated in FIG. 2, but can be located inside the terminal 100. A dual monitor controller 400 which will be described below can be located inside the computing device 200. That is, the dual monitor controller 400 should be interpreted based on the function of the configuration rather than an arrangement of the configuration in the present disclosure.

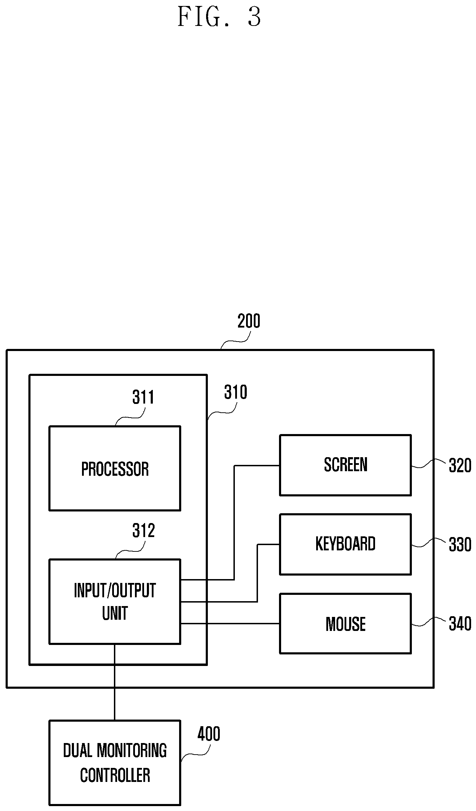

FIG. 3 illustrates details of the computing device 200.

The computing device 200 can include a main body 310 and peripherals 320 to 340. The main body can include a processor 311 for controlling general operations of the computing device 200 and an input/output unit 312 provided to connect the peripherals 320 to 340 and the terminal 100.

A screen 320, a keyboard 330, and a mouse 340 transmit/receive signals through the input/output unit 312. The screen 320 can receive an output signal of the processor 311 and an output signal of the terminal 100 through the input/output unit 312 and display an output screen. The keyboard 330 and the mouse 340 are user input means and input signals input by the keyboard 330 and the mouse 340 can be transmitted to the processor 311 and the terminal 100 through the input/output unit 312.

The dual monitor controller 400 is connected to the terminal 100 and the computing device 200 to control switching to the dual monitor mode or the single monitor mode. The dual monitor controller 440 can be located outside or inside the computing device 200 as described above.

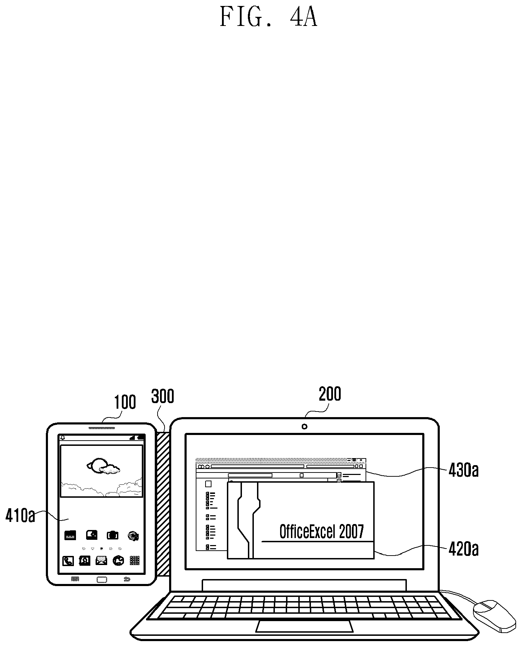

FIGS. 4A to 4C illustrate that a dual monitor system operates in the dual monitor mode. Referring to FIG. 4A, the terminal 100 and the computing device 200 are connected through a wire or wirelessly, using any suitable communication technologies including cellular, Wifi, Bluetooth, and Near Field Technologies (NFC). The terminal 100 and the computing device 200 may be attached to each other by a connection device 300.

Each of the terminal 100 and the computing device 200 operates in the single monitor mode. The terminal 100 displays a user interface 410a on the touch screen. The computing device 200 displays one or more application program windows 420a and 430a being executed on the screen.

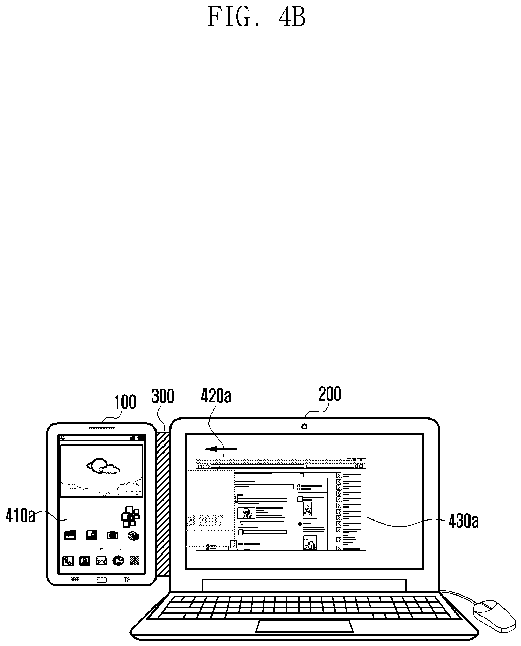

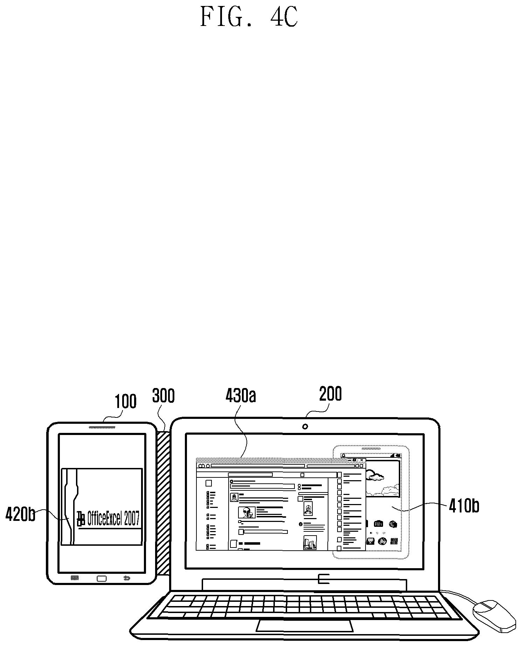

Thereafter, as illustrated in FIG. 4B, the application program window 420a displayed on the screen of the computing device 200 is dragged using a mouse connected to the computing device 200 and moved in a direction in which the terminal 100 is located by a predetermined distance. At this time, the direction in which the terminal 100 is located can be preset by the user. When the application program window 420a is dragged by a threshold or more, switching to the dual monitor mode is made as illustrated in FIG. 4C. That is, the dragged application program window 420 disappears from the screen of the computing device 200 and the application program window 420b is generated on the touch screen of the terminal 100. That is, the touch screen of the terminal 100 operates as one of a dual screen of the computing device 200. Meanwhile, a user interface 410b of the terminal 100 is copied to the screen of the computing device 200. Accordingly, even in the dual monitor mode, the user can execute a function of the terminal 100 through the user interface 410b of the terminal 100 copied to the screen of the computing device 200.

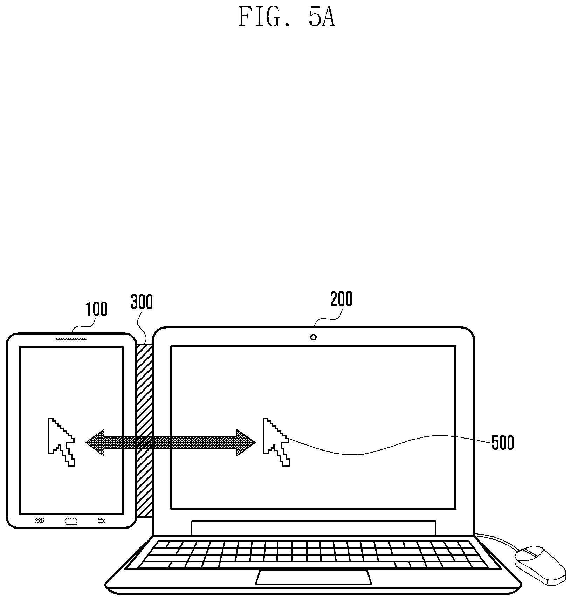

Referring to FIG. 5A, when the dual monitor system is in the single monitor mode, a mouse cursor 500 can move on the screen of the computing device 200 and the touch screen of the terminal 100 through a control of the mouse by the user. That is, in the single monitor mode, through a mouse and a keyboard corresponding to input means connected to the computing device 200, a function of the terminal 100 can be executed on the screen of the terminal 100 or a function of the computing device 200 can be executed on the screen of the computing device 200.

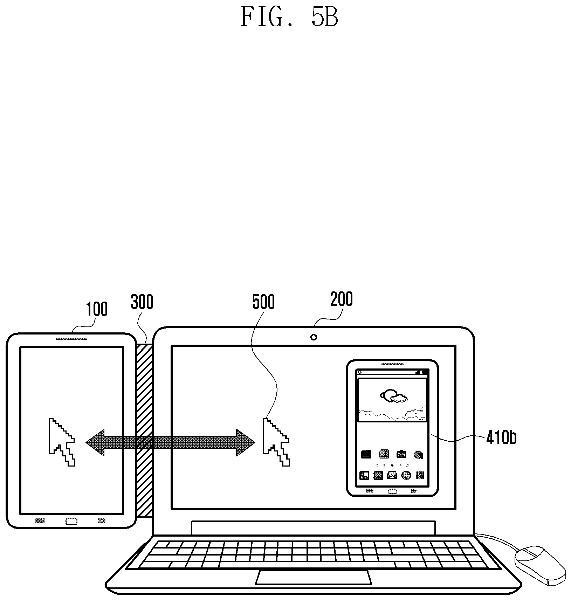

Referring to FIG. 5B, when the dual monitor system is in the dual monitor mode, the touch screen of the terminal 100 operates as one of the dual screen of the computing device 200. That is, the mouse cursor 500 can move on the touch screen of the terminal 100 as well as on the screen of the computing device 200, so as to control the application program window executed by the computing device 200. Further, the user interface 410b of the terminal 100 is copied to the screen of the computing device 200. The user can execute the function of the terminal 100 through the copied user interface 410b. That is, in the dual monitor mode, through the mouse and the keyboard corresponding to the input means connected to the computing device 200, the application program window executed by the computing device 200 can be controlled on both the touch screen of the terminal and the screen of the computing device 200 and the function of the terminal 100 can be executed on the copied user interface 410b.

Meanwhile, according to a comparative example, since the terminal 100 and the computing device 200 are connected to each other, a file displayed on the touch screen of the terminal 100 can be copied to the computing device 200 by dragging the file through a mouse cursor 500 and a file displayed on the screen of the computing device 200 can be copied to the terminal 100 by dragging the file.

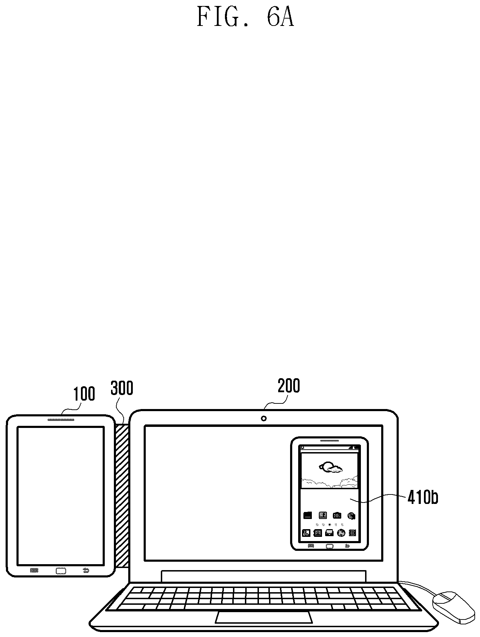

FIGS. 6A to 6C illustrate a comparative example method in which a dual monitor system ends a dual monitor mode.

Referring to FIG. 6A, the dual monitor system is in a state where the dual monitor mode is operated. That is, the terminal 100 is connected to the computing device 200 and the touch screen of the terminal 100 operates as one of the dual screen of the computing device 200. The user interface 410b of the terminal 100 is copied to the screen of the computing device 200.

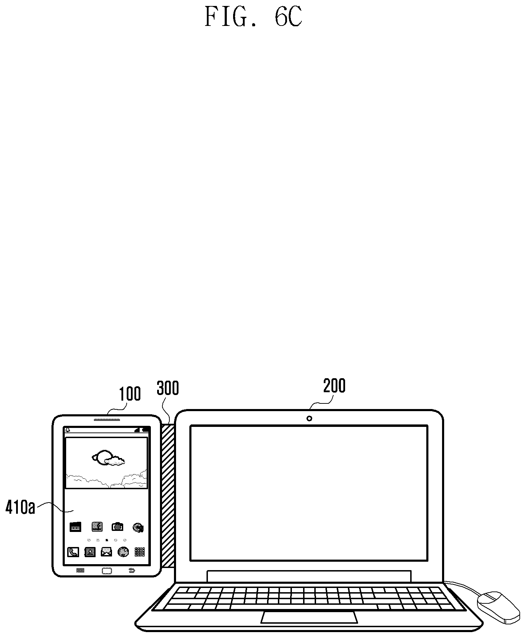

Thereafter, as illustrated in FIG. 6C, the user interface 410b of the terminal 100 copied to the screen of the computing device 200 is moved to the terminal 100. For example, the copied user interface 410b can be dragged using a mouse. Since the touch screen of the terminal 100 and the screen of the computing device 200 operate in the dual monitor mode, the copied user interface 410b can be moved to the touch screen of the terminal 100 according to the drag. According to a comparative example, only when an application program window executed by the computing device 200 does not exist on the touch screen of the terminal 100, the movement of the copied user interface 410 to the touch screen of the terminal 100 is allowed. That is, when the touch screen of the terminal 100 displays a function actually executed by the computing device 200 in the dual monitor mode, it can be preset to not end the dual monitor mode.

Alternatively, according to another comparative example, when an application program window executed by the computing device 200 is displayed on the touch screen of the terminal 100, if the copied user interface 410 is moved to the touch screen of the terminal 100, the corresponding application program window can be displayed on the screen of the computing device 200.

As illustrated in FIG. 6C, when the user interface 410a reaches the terminal 100, the dual monitor mode ends. That is, each of the touch screen of the terminal 100 and the screen of the computing device 200 operates in the single monitor mode.

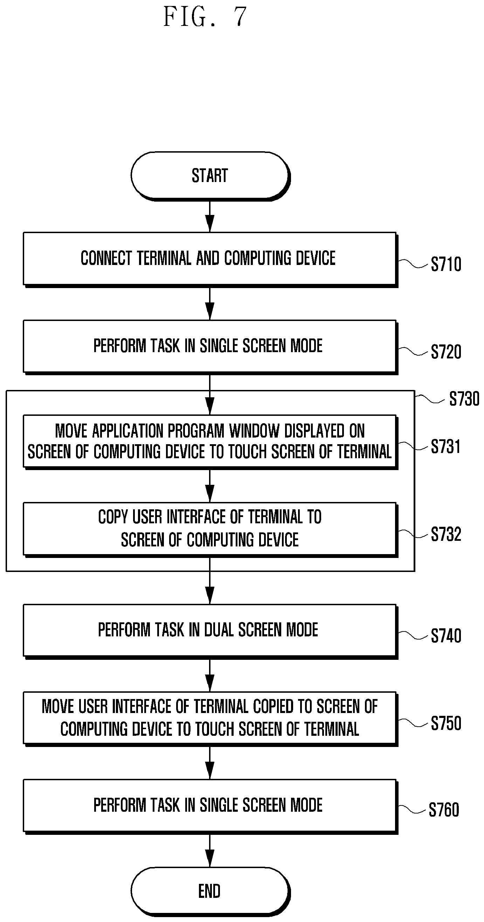

FIG. 7 is a flowchart illustrating a dual monitor method according to a comparative example of the present disclosure.

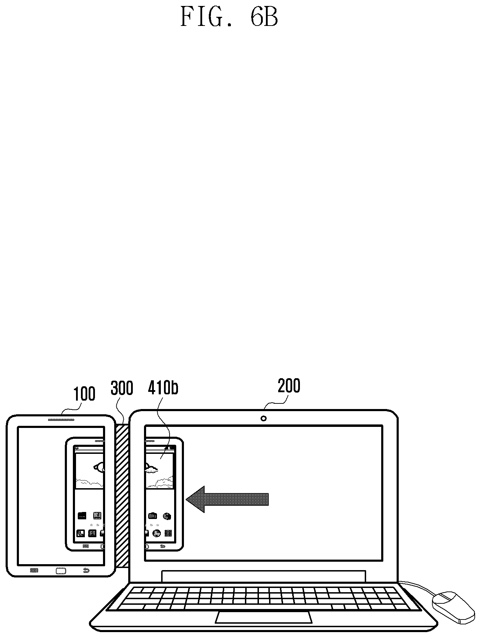

The dual monitor method illustrated in FIG. 7 will be described below with reference to FIGS. 4 and 6.

First, the terminal 100 and the computing device 200 are connected to each other in step S710. Each of the connected terminal 100 and computing device 200 performs a task in the single monitor mode in step S720. That is, the terminal 100 provides a user interface through the touch screen of the terminal 100 and the computing device 200 provides an application program window through the screen of the computing device 200.

In step S730, the terminal 100 and the computing device 200 are switched to the dual monitor mode. Specifically, when the application program window 420a displayed on the screen of the computing device 200 is moved to the touch screen of the terminal 100 in step S731, the user interface 410b of the terminal 100 is copied to the screen of the computing device 200 in step S732. Thereafter, in step S740, the terminal 100 and the computing device 200 perform tasks in the dual monitoring mode.

In step S750, the terminal 100 and the computing device 200 end the dual monitor mode. Specifically, the user interface 410b copied to the screen of the computing device 200 is moved to the touch screen of the terminal 100. Thereafter, in step S760, the terminal 100 and the computing device 200 perform tasks in the single monitor mode.

In step S750, the terminal 100 and the computing device 200 end the dual monitor mode. Specifically, the user interface 410b copied to the screen of the computing device 200 is moved to the touch screen of the terminal 100. Thereafter, in step S760, the terminal 100 and the computing device 200 perform tasks in the single monitor mode.

Although the present disclosure has been described with an exemplary embodiment, various changes and modifications may be suggested to one skilled in the art. It is intended that the present disclosure encompass such changes and modifications as fall within the scope of the appended claims.

## Claims

1. A dual monitor system, comprising a mobile terminal (100) and a computing device (200), connected through a wire or wirelessly,
the mobile terminal (100) comprising:
a transceiver configured to communicate data with the computing device (200);
a touch screen (220) configured to display a user interface; and
a first processor (210) configured to provide the user interface to the touch screen (220) for display in a single monitor mode; and
the computing device (200) comprising:
a user input means (330, 340);
a screen (320) configured to display one or more application program windows; and
a second processor (311) configures to provide the one or more application program windows to the screen (320) for display in a single monitor mode;
the dual monitor system comprising:
a dual monitor controller (400) connected to the mobile terminal (100) and the computing device (200), and configured to:
detect that one of the one or more application program windows (420a; 430a) displayed on the screen of the computing device is dragged using the user input means (330, 340) connected to the computing device (200) in a direction of the touch screen (220) of the mobile terminal;
control the touch screen in a dual monitor mode to display an application window if the application program window (420a; 430a) is dragged for a distance equal to, or above, a threshold; and
in response to the displaying of the application program window (420a; 430a) on the touch screen (220) of the mobile terminal (100), copy, when in the dual monitor mode, a user interface (410a), comprising a plurality of executable functions, from the touch screen (220) of the mobile terminal (100) onto the screen (320) of the computing device (200).

2. The dual monitor system of claim 1, wherein functions of the computing device (200) and the mobile terminal (100) are executed by a user input means through the user interface (410a) of the mobile terminal (100) which is displayed on the screen (320) of the computing device (200).

3. A method for dual screen presentation by the dual monitor system of claim 1, the method comprising:
detecting that one of one or more application program windows (420a; 430a) displayed on the screen (320) of the computing device (200) is dragged using the user input means of the computing device (200) in a direction of the touch screen (220) of the mobile terminal (100);
controlling the touch screen (220) in a dual monitor mode to display an application window if the application program window (420a; 430a) is dragged for a distance equal to, or above, a threshold; and
in response to the displaying of the application program window (420a; 430a) on the touch screen (220) of the mobile terminal (100), copying, when in the dual monitor mode, a user interface (410a) comprising a plurality of executable functions, from the touch screen (220) of the mobile terminal (100) onto the screen (320) of the computing device (200).

4. The method of claim 3, wherein a user executes a function of the mobile terminal (100) through the user interface (410a) of the mobile terminal (100) which is displayed on the screen (320) of the computing device (200).

## Patentansprüche

1. Ein Doppelbildschirmsystem, das ein mobiles Endgerät (100) und eine Rechenvorrichtung (200) umfasst, die über eine Drahtverbindung oder drahtlos miteinander verbunden sind, wobei das mobile Endgerät (100) Folgendes umfasst:
eine Sende-/Empfangseinheit, die zur Kommunikation von Daten mit der Rechenvorrichtung (200) eingerichtet ist;
einen Berührungsbildschirm (220), der eingerichtet ist, um eine Benutzeroberfläche anzuzeigen; und
einen ersten Prozessor (210), der eingerichtet ist, um dem Berührungsbildschirm (220) die Benutzeroberfläche zur Anzeige in einem Einzelbildschirmmodus bereitzustellen; und
wobei die Rechenvorrichtung (200) Folgendes umfasst:
eine Benutzereingabeeinrichtung (330, 340);
einen Bildschirm (320), der eingerichtet ist, um mindestens ein Anwendungsprogrammfenster anzuzeigen; und
einen zweiten Prozessor (311), der eingerichtet ist, um dem Bildschirm (320) das mindestens eine Anwendungsprogrammfenster zur Anzeige in einem Einzelbildschirmmodus bereitzustellen;
wobei das Doppelbildschirmsystem Folgendes umfasst:
eine Doppelbildschirm-Steuereinheit (400), die mit dem mobilen Endgerät (100) und der Rechenvorrichtung (200) verbunden ist und die für folgende Zwecke eingerichtet ist:
Erkennen, dass ein Anwendungsprogrammfenster unter dem mindestens einen Anwendungsprogrammfenster (420a; 430a), das auf dem Bildschirm der Rechenvorrichtung angezeigt wird, mittels der mit der Rechenvorrichtung (200) verbundenen Benutzereingabeeinrichtung (330, 340) in eine Richtung des Berührungsbildschirms (220) des mobilen Endgeräts gezogen wird;
Steuern des Berührungsbildschirms in einem Doppelbildschirmmodus zur Anzeige eines Anwendungsfensters, wenn das Anwendungsprogrammfenster (420a; 430a) über eine Entfernung größer gleich einem Schwellenwert gezogen wird; und
Kopieren einer Benutzeroberfläche (410a), die eine Vielzahl ausführbarer Funktionen umfasst, von dem Berührungsbildschirm (220) des mobilen Endgeräts (100) auf den Bildschirm (320) der Rechenvorrichtung (200), wobei dies bei der Ausführung im Doppelbildschirmmodus und infolge der Anzeige des Anwendungsprogrammfensters (420a; 430a) auf dem Berührungsbildschirm (220) des mobilen Endgeräts (100) erfolgt.

2. Das Doppelbildschirmsystem nach Anspruch 1, wobei Funktionen der Rechenvorrichtung (200) und des mobilen Endgeräts (100) durch eine Benutzereingabeeinrichtung über die Benutzeroberfläche (410a) des mobilen Endgeräts (100) ausgeführt werden, die auf dem Bildschirm (320) der Rechenvorrichtung (200) angezeigt wird.

3. Ein Verfahren zur Doppelbildschirmdarstellung durch das Doppelbildschirmsystem nach Anspruch 1, wobei das Verfahren Folgendes umfasst:
Erkennen, dass ein Anwendungsprogrammfenster unter dem mindestens einen Anwendungsprogrammfenster (420a; 430a), das auf dem Bildschirm (320) der Rechenvorrichtung (200) angezeigt wird, mittels der Benutzereingabeeinrichtung der Rechenvorrichtung (200) in eine Richtung des Berührungsbildschirms (220) des mobilen Endgeräts (100) gezogen wird;
Steuern des Berührungsbildschirms (220) in einem Doppelbildschirmmodus zur Anzeige eines Anwendungsfensters, wenn das Anwendungsprogrammfenster (420a; 430a) über eine Entfernung größer gleich einem Schwellenwert gezogen wird; und
Kopieren einer Benutzeroberfläche (410a), die eine Vielzahl ausführbarer Funktionen umfasst, von dem Berührungsbildschirm (220) des mobilen Endgeräts (100) auf den Bildschirm (320) der Rechenvorrichtung (200), wobei dies bei der Ausführung im Doppelbildschirmmodus und infolge der Anzeige des Anwendungsprogrammfensters (420a; 430a) auf dem Berührungsbildschirm (220) des mobilen Endgeräts (100) erfolgt.

4. Das Verfahren nach Anspruch 3, wobei ein Benutzer eine Funktion des mobilen Endgeräts (100) über die Benutzeroberfläche (410a) des mobilen Endgeräts (100) ausführt, die auf dem Bildschirm (320) der Rechenvorrichtung (200) angezeigt wird.

## Revendications

1. Un système à double moniteur, comprenant un terminal mobile (100) et un dispositif informatique (200), raccordés par l'intermédiaire d'un fil ou de manière non filaire, le terminal mobile (100) comprenant :
un émetteur-récepteur configuré de façon à communiquer des données avec le dispositif informatique (200),
un écran tactile (220) configuré de façon à afficher une interface utilisateur, et
un premier processeur (210) configuré de façon à fournir l'interface utilisateur à l'écran tactile (220) pour un affichage dans un mode à moniteur unique, et
le dispositif informatique (200) comprenant :
un moyen d'entrée d'utilisateur (330, 340),
un écran (320) configuré de façon à afficher une ou plusieurs fenêtres de programme d'application, et
un deuxième processeur (311) configuré de façon à fournir les une ou plusieurs fenêtres de programme d'application à l'écran (320) pour un affichage dans un mode à moniteur unique,
le système à double moniteur comprenant :
un dispositif de commande de double moniteur (400) raccordé au terminal mobile (100) et au dispositif informatique (200), et configuré de façon à :
détecter qu'une des une ou plusieurs fenêtres de programme d'application (420a; 430a) affichées sur l'écran du dispositif informatique est glissée au moyen du moyen d'entrée d'utilisateur (330, 340) raccordé au dispositif informatique (200) dans une direction de l'écran tactile (220) du terminal mobile,
commander l'écran tactile dans un mode à double moniteur de façon à afficher une fenêtre d'application si la fenêtre de programme d'application (420a; 430a) est glissée sur une distance égale, ou supérieure, à un seuil, et
en réponse à l'affichage de la fenêtre de programme d'application (420a; 430a) sur l'écran tactile (220) du terminal mobile (100), copier, lorsque dans le mode à double moniteur, une interface utilisateur (410a), comprenant une pluralité de fonctions exécutables, à partir de l'écran tactile (220) du terminal mobile (100) vers l'écran (320) du dispositif informatique (200).

2. Le système à double moniteur selon la Revendication 1, où des fonctions du dispositif informatique (200) et du terminal mobile (100) sont exécutées par un moyen d'entrée d'utilisateur par l'intermédiaire de l'interface utilisateur (410a) du terminal mobile (100) qui est affichée sur l'écran (320) du dispositif informatique (200).

3. Un procédé destiné à une présentation à écran double par le système à double moniteur selon la Revendication 1, le procédé comprenant :
la détection qu'une fenêtre d'une ou de plusieurs fenêtres de programme d'application (420a; 430a) affichées sur l'écran (320) du dispositif informatique (200) est glissée au moyen du moyen d'entrée d'utilisateur du dispositif informatique (200) dans une direction de l'écran tactile (220) du terminal mobile (100),
la commande de l'écran tactile (220) dans un mode à double moniteur de façon à afficher une fenêtre d'application si la fenêtre de programme d'application (420a; 430a) est glissée sur une distance égale, ou supérieure, à un seuil, et
en réponse à l'affichage de la fenêtre de programme d'application (420a; 430a) sur l'écran tactile (220) du terminal mobile (100), la copie, lorsque dans le mode à double moniteur, d'une interface utilisateur (410a) comprenant une pluralité de fonctions exécutables, à partir de l'écran tactile (220) du terminal mobile (100) vers l'écran (320) du dispositif informatique (200).

4. Le procédé selon la Revendication 3, où un utilisateur exécute une fonction du terminal mobile (100) par l'intermédiaire de l'interface utilisateur (410a) du terminal mobile (100) qui est affichée sur l'écran (320) du dispositif informatique (200).
